# EUROPEAN PATENT APPLICATION

(11) **EP 4 825 488 A1**
(43) Date of publication of application: **21.10.2026**
(21) Application number: 24902002.5
(22) Date of filing: 11.05.2024
(51) Int. Cl.: B01J 27/22, B01J 37/00, C10G 2/00

(54) **X-IRON CARBIDE COMPLEX, PREPARATION METHOD THEREFOR AND USE THEREOF**

(30) Priority: 15.12.2023 CN 202311737353
(71) Applicant: China Energy Investment Corporation Limited, Beijing 100011 (CN); National Institute of Clean-and-Low-Carbon Energy, Beijing 102211 (CN)
(72) Inventor: WANG, Peng, Beijing 102211 (CN); MEN, Zhuowu, Beijing 102211 (CN); LIN, Quan, Beijing 102211 (CN); LV, Yijun, Beijing 102211 (CN); CHAI, Jiachun, Beijing 102211 (CN); BU, Yifeng, Beijing 102211 (CN); WU, Peng, Beijing 102211 (CN); WANG, Tao, Beijing 102211 (CN); JIANG, Jidong, Beijing 102211 (CN); WANG, Annan, Beijing 102211 (CN)
(74) Representative: Studio Torta S.p.A.
(86) International application number: PCT/CN2024/092673
(87) International publication number: WO 2025/123572

(57) **Abstract**

The present invention relates to a χ-iron-carbide composite, a preparation method therefor and a use thereof. The composite comprises iron carbide and a halide ion, the iron carbide comprises χ-iron-carbide, and the halide ion is a bromide ion and/or an iodide ion; the χ-iron-carbide and the halide ion are in a molar ratio of 100:(0.1-45), and the number of moles of the χ-iron-carbide is based on the number of moles of an iron element contained therein; the composite has a monoclinic crystal structuremonoclinic crystal structure. The χ-iron-carbide composite according to one embodiment of the present disclosure can be used as a catalyst for a syngas conversion reaction. By introducing the halide ions, such as bromine ions or iodide ions, into the χ-iron-carbide composite, the reaction has a high CO conversion rate and extremely low overall CO₂ selectivity, thereby realizing comprehensive optimization of reaction results.

## Description

### TECHNICAL FIELD

The present disclosure relates to syngas conversion, and in particular to a χ-iron-carbide composite capable of being used for syngas conversion and a preparation method therefor.

### BACKGROUND

The primary energy production in China is characterized by rich coal, insufficient oil, and a lack of natural gas. With the development of China's economy, the degree of dependence on imported petroleum has been continuously rising. Syngas is a mixed gas (consisting of CO and H₂) obtained by the gasification of coal, natural gas, and biomass. The syngas conversion technology has become an increasingly important energy conversion pathway in recent years. It can be used to gasify carbonaceous matter, such as coal, natural gas, and biomass, to obtain syngas, which is then converted into liquid fuels and high-value chemicals.

The reaction equation for syngas conversion is as follows:

(2*n*+1)H₂ + *n*CO → C*ₙ*H_{2*n*+2} + *n*H₂O (a)

*2n*H₂ + *n*CO → C*ₙ*H*₂ₙ* + nH₂O (b)

(*n*+*1*)H₂ + 2nCO → CₙH*₂ₙ₊₂* + *n*CO₂ (c)

*n*H₂ + *2n*CO → C*ₙ*H*₂ₙ* + *n*CO₂ (d)

Iron-based catalysts are the least expensive and readily available catalysts for syngas conversion. The iron-based catalysts have the advantages of relatively high activity, a wide application condition window, strong sulfur resistance, simple and convenient on-line catalyst replacement, suitability for industrial continuous production, and the like. However, one of the bottleneck problems existing in the traditional iron-based catalysts for the syngas conversion technology is that they have excessively high CO₂ selectivity (usually 35-45% of the converted starting material CO).

The paper ("Pathways for CO2 Formation and Conversion During Fischer-Tropsch Synthesis on Iron-Based Catalysts" (Catalysis Letters volume 80, pages 77-86 (2002))) published by the Professor Enrique Iglesia elucidates that there are two sources of CO₂ production in syngas conversion reactions achieved by the Fischer-Tropsch synthesis principle: (1) primary CO₂ directly from one Fischer-Tropsch synthesis reaction (see equations (c) and (d) above); and (2) secondary CO₂ produced at a relatively high CO conversion rate by a water-gas-shift reaction (WGS reaction, CO + H₂O → CO₂ + H₂) of H₂O and CO.

Disclosed in the prior art is a high-purity iron carbide catalyst, which can reduce the primary CO₂ of the Fischer-Tropsch synthesis reaction to near zero while achieving high CO space-time conversion rates, thereby reducing the overall CO₂ selectivity to <5% at a low CO conversion rate (typically less than 35%). However, as the CO conversion rate increases, the WGS reaction becomes more vigorous with the increase in the H₂O content in the reaction environment, causing an increase in secondary CO₂, which ultimately leads to an increase in the overall CO₂ selectivity at a high CO conversion rate.

In addition, reducing the CO₂ selectivity can greatly improve the utilization efficiency of carbon atoms and substantially improve the economy and environmental friendliness of the syngas conversion technology. Therefore, how to inhibit the water-gas-shift side reaction, reduce the CO₂ selectivity, and improve the utilization efficiency of carbon atoms at a high CO conversion rate has become one of the common key problems in the field of syngas conversion. In another aspect, in addition to CO₂, another major by-product in the field of syngas conversion is methane. In the reaction, higher CH₄ selectivity and higher CO₂ selectivity together reduce the effective product selectivity of the reaction.

### SUMMARY

In order to overcome at least one defect of the prior art described above, in a first aspect, one embodiment of the present disclosure provides a χ-iron-carbide composite comprising iron carbide and a halide ion, the iron carbide comprises χ-iron-carbide, and the halide ion is a bromide ion and/or an iodide ion; the χ-iron-carbide and the halide ion are in a molar ratio of 100:(0.1-45), and the number of moles of the χ-iron-carbide is based on the number of moles of an iron element contained therein; the composite has a monoclinic crystal structure.

In a second aspect, one embodiment of the present disclosure provides a preparation method for the χ-iron-carbide composite described above, comprising the following steps:
S1: performing reduction and surface purification treatment on a precursor at a temperature of 260 °C to 470 °C under the action of hydrogen to obtain a reduced product;
S2: performing surface passivation treatment on the reduced product at a temperature of 0 °C to 40 °C in a first gas atmosphere to obtain a passivated product; and
S3: treating the passivated product at a temperature of 250 °C to 430 °C in a second gas atmosphere to form a product containing iron carbide;
wherein the first gas comprises 1 vol% to 3 vol% oxygen; the second gas comprises hydrogen and carbon monoxide, and hydrogen and carbon monoxide are in a molar ratio of (8-90):1;
the precursor is nanoiron and/or a nano iron compound subjected to a first impregnation treatment by an impregnation solution, and the nano iron compound is capable of preparing nanoiron by a reduction reaction; or
the precursor is the nanoiron and/or the nano iron compound, and the passivated product is subjected to a second impregnation treatment in the impregnation solution before the treatment in step S3; or
the precursor is the nanoiron and/or the nano iron compound, and the product containing iron carbide is subjected to a third impregnation treatment by the impregnation solution; the impregnation solution comprises bromide ions and/or iodide ions.

In a third aspect, one embodiment of the present disclosure provides a catalyst comprising the χ-iron-carbide composite described above or a χ-iron-carbide composite prepared by the preparation method described above.

In a fourth aspect, one embodiment of the present disclosure provides use of the χ-iron-carbide composite described above, a χ-iron-carbide composite prepared by the preparation method described above, or the catalyst described above in a syngas conversion reaction.

In a fifth aspect, one embodiment of the present disclosure provides use of the χ-iron-carbide composite described above, a χ-iron-carbide composite prepared by the preparation method described above, or the catalyst described above in a reaction for the synthesis of C and H fuels and/or chemicals on the basis of the Fischer-Tropsch synthesis principle.

In a sixth aspect, one embodiment of the present disclosure provides a syngas conversion process, comprising contacting the catalyst described above with syngas under reaction conditions.

The χ-iron-carbide composite according to one embodiment of the present disclosure may be used as a catalyst for a syngas conversion reaction, particularly for a Fischer-Tropsch synthesis reaction. By introducing halide ions, such as bromide or iodide ions, into the χ-iron-carbide composite, the reaction has a relatively high CO conversion rate, extremely low overall CO₂ selectivity, and low CH₄ selectivity, thereby achieving the comprehensive optimization of reaction results.

### BRIEF DESCRIPTION OF THE DRAWINGS

The accompanying drawings are provided solely for the purpose of illustrating specific examples and is not to be construed as limiting the present disclosure. In the accompanying drawings,

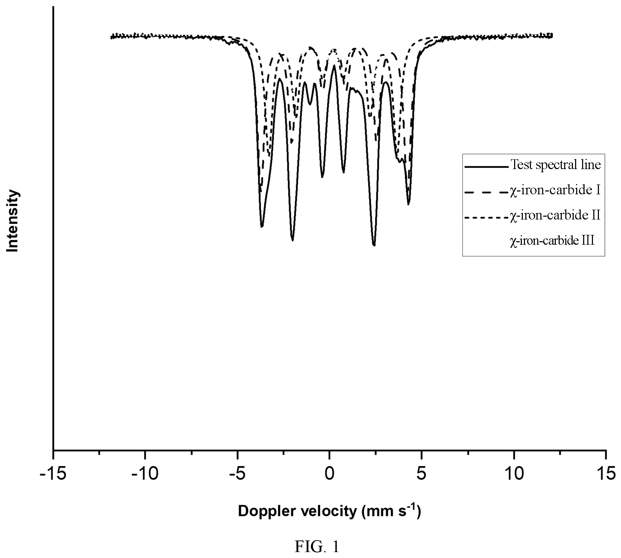

FIG. 1 shows a Mössbauer spectrum of the χ-iron-carbide composite CX1 prepared in Example 1 of the present disclosure.

### DETAILED DESCRIPTION

Exemplary embodiments that embody the features and advantages of the present disclosure are described in detail in the following description. It should be understood that the present disclosure can have various changes in different embodiments without departing from the scope of the present disclosure, and the description therein is for illustrative purposes in nature and is not intended to limit the present disclosure.

One embodiment of the present disclosure provides a χ-iron-carbide composite comprising iron carbide and a halide ion, the iron carbide comprises χ-iron-carbide, and the halide ion is a bromide ion and/or an iodide ion; the χ-iron-carbide and the halide ion are in a molar ratio of 100:(0.1-45); herein, the number of moles of the χ-iron-carbide is based on the number of moles of an iron element contained therein; the composite has a monoclinic crystal structure.

In one embodiment, the average crystal grain diameter of the composite is 6-35 nm, and may further be 9-28 nm.

In one embodiment, the χ-iron-carbide and the halide ion may be in a molar ratio of 100:(0.1-45), further 100:(0.5-27), and still further 100:(7-20), such as 100:0.5, 100:1, 100:5, 100:7, 100:10, 100:15, 100:20, 100:25, 100:30, or 100:40.

In one embodiment, the χ-iron-carbide composite comprises a first cation, the first cation comprises a halide cation, the halide cation is capable of maintaining charge balance with the halide ion, that is, the total number of negative charges of halide ions (or the total number of displayed valences) is equal to the total number of positive charges of halide cations.

In one embodiment, the first cation comprises an additional cation, and the χ-iron-carbide and the additional cation may be in a molar ratio of 100:(0.1-23), further 100:(0.1-17), and still further 100:(0.1-12), such as 100:0.5, 100:1, 100:3, 100:5, 100:10, 100:15, or 100:20.

In one embodiment, the χ-iron-carbide composite further comprises an additional anion, and the additional cation is capable of maintaining charge balance with the additional anion.

In one embodiment, the halide cation comprises one or more of a first metal ion and a complex cation. Further, the first metal ion comprises one or more of an iron ion (e.g., a divalent or trivalent iron ion), a manganese ion (e.g., a divalent manganese ion), a copper ion (e.g., a monovalent or divalent copper ion), a cobalt ion (e.g., a divalent cobalt ion), a molybdenum ion (e.g., a divalent, trivalent, or tetravalent molybdenum ion), a lanthanum ion (e.g., a trivalent or tetravalent lanthanum ion), a cerium ion (e.g., a trivalent or tetravalent cerium ion), and a neodymium ion (e.g., a trivalent or tetravalent neodymium ion); the complex cation comprises one or more of a hexaammine manganese ion, a hexaammine iron ion, and a hexaammine copper ion.

In one embodiment, the additional cation comprises one or more of second metal ions.The second metal ion may comprise one or more of a manganese ion, a copper ion, a cobalt ion, a molybdenum ion, a chromium ion, a rare earth ion, an alkali metal ion, and an alkaline earth metal ion; for example, the second metal ion may be one or more of a manganese ion (e.g., a divalent, trivalent, or tetravalent manganese ion), a copper ion (e.g., a monovalent or divalent copper ion), a cobalt ion (e.g., a divalent cobalt ion), a molybdenum ion (e.g., a divalent, trivalent, or tetravalent molybdenum ion), a chromium ion (e.g., a trivalent chromium ion), a lanthanum ion (e.g., a trivalent or tetravalent lanthanum ion), a cerium ion (e.g., a trivalent or tetravalent cerium ion), a neodymium ion (e.g., a trivalent or tetravalent neodymium ion), a sodium ion, a potassium ion, a calcium ion, and a barium ion.

In one embodiment, the additional anion comprises one or more of an oxygen ion, a complex ion, and an acid radical ion, such as an oxygen ion, nitrate, citrate, and gluconate.

One embodiment of the present disclosure provides a preparation method for the χ-iron-carbide composite described above, comprising the following steps:
S1: performing high-temperature treatment on a precursor at a temperature of 260-470 °C for reduction and surface purification under the action of hydrogen to obtain a reduced product;
S2: performing a treatment on the reduced product at a temperature of 0-40 °C in a first gas atmosphere for surface passivation to obtain a passivated product; and
S3: performing high-temperature treatment on the passivated product at a temperature of 250-430 °C in a second gas atmosphere to form iron carbide, so as to obtain a product containing iron carbide;
wherein the first gas comprises 1-3 vol% oxygen; the second gas comprises hydrogen and carbon monoxide, and hydrogen and carbon monoxide are in a molar ratio of (8-90):1;
the precursor is nanoiron and/or a nano iron compound subjected to a first impregnation treatment by an impregnation solution, and the nano iron compound is capable of preparing nanoiron by a reduction reaction; or
the precursor is nanoiron and/or a nano iron compound, and the passivated product is subjected to a second impregnation treatment in the impregnation solution before the treatment in step S3; or the precursor is nanoiron and/or a nano iron compound, and the product containing iron carbide is subjected to a third impregnation treatment by the impregnation solution; the impregnation solution comprises bromide ions and/or iodide ions.

In one embodiment, the nano iron compound comprises one or more of nano iron oxide, nanomagnetite, nano goethite, and nano iron hydrous oxide.

In one embodiment, the nanoiron or the nano iron compound may be nanoiron powder and/or nanoiron particles.

In one embodiment, the average crystal grain diameter of the nanoiron or the nano iron compound is 6-35 nm, and may further be 9-28 nm, such as 10 nm, 12 nm, 15 nm, 18 nm, 20 nm, 22 nm, 25 nm, 30 nm, or 32 nm.

In one embodiment, the impregnation solution is prepared by dissolving a solute in a solvent, wherein the solute may comprise a water-soluble halide, and the halide comprises a bromide and/or an iodide. Further, the halide comprises one or more of a bromide and an iodide containing manganese, iron, copper, cobalt, molybdenum, and a rare earth metal element; for example, the halide may be one or more of manganese bromide, iron(II) bromide, copper bromide, cobalt bromide, molybdenum bromide, manganese iodide, iron(II) iodide, copper iodide, a rare earth bromide, a rare earth iodide, hexaammine manganese bromide, hexaammine iron bromide, hexaammine copper bromide, hexaammine manganese iodide, hexaammine iron iodide, and hexaammine copper iodide.

In one embodiment, the concentration of the halide in the impregnation solution may be 0.7-7 mol/L, such as 1 mol/L, 2 mol/L, 3 mol/L, 5 mol/L, or 6 mol/L.

In one embodiment, the solvent of the impregnation solution comprises water and/or ethanol; for example, the solvent may be water or a mixture of ethanol and water.

In one embodiment, the solute of the impregnation solution further comprises an additional compound, and the additional compound comprises one or more of salts (organic and/or inorganic salts) of manganese, copper, cobalt, molybdenum, a rare earth metal, an alkali metal, and an alkaline earth metal. For example, the additional compound may be one or more of potassium nitrate, sodium nitrate, manganese nitrate, copper nitrate, cobalt nitrate, molybdenum nitrate, calcium nitrate, barium nitrate, rare earth nitrate, potassium carbonate, sodium carbonate, potassium citrate, sodium citrate, manganese citrate, copper citrate, cobalt citrate, molybdenum citrate, calcium citrate, barium citrate, potassium gluconate, sodium gluconate, lithium gluconate, rubidium gluconate, cesium gluconate, manganese gluconate, copper gluconate, and calcium gluconate.

In one embodiment, no chemical reaction occurs between the solute components of the impregnation solution. For example, the solute does not comprise both potassium carbonate and calcium nitrate.

In one embodiment, the concentration of the additional compound in the impregnation solution may be 0.7-7 mol/L, such as 1 mol/L, 2 mol/L, 3 mol/L, 5 mol/L, or 6 mol/L.

In one embodiment, the precursor is nanoiron or a nano iron compound subjected to a first impregnation treatment by an impregnation solution, and the first impregnation treatment, the second impregnation treatment, or the third impregnation treatment is performed at a temperature of 0-50 °C, and may further be performed at a temperature of 20-30 °C, such as 10 °C, 15 °C, 20 °C, 25 °C, 30 °C, 35 °C, 40 °C, or 45 °C; the first impregnation treatment, the second impregnation treatment, or the third impregnation treatment may be performed for 0.1-12 h, further 0.2-10 h, and still further 0.3-9 h, such as 0.5 h, 1 h, 2 h, 3 h, 4 h, 5 h, 6 h, 7 h, or 8 h.

In one embodiment, the material after the first impregnation treatment, the second impregnation treatment, or the third impregnation treatment may be dried at 15-40 °C, and further dried in the dark. The drying may be performed at a temperature of, for example, 20 °C, 25 °C, 30 °C, or 35 °C; the drying may be performed for 0.5-12 h. The drying treatment may be performed under normal pressure or under reduced pressure.

In one embodiment, the first impregnation treatment, the second impregnation treatment, or the third impregnation treatment may be performed using one of a slurry impregnation method, a saturated impregnation method, a supersaturated impregnation method, or other applicable impregnation methods.

In one embodiment, the reduction and surface purification treatment in step S1 may be performed at a temperature of 260-470 °C, such as 300 °C, 310 °C, 320 °C, 350 °C, 370 °C, 400 °C, 420 °C, or 450 °C; the treatment may be performed under a pressure of 0.12-10 atm, and further 0.15-7 atm, such as 0.15 atm, 0.2 atm, 0.5 atm, 0.8 atm, 1 atm, 1.5 atm, 2 atm, 5 atm, 8 atm, or 10 atm; the treatment may be performed for 1.2-25 h, and further 2-12 h, such as 5 h, 8 h, 10 h, 15 h, 20 h, or 25 h.

In one embodiment, the gas flow rate of H₂ in step S1 may be 600-22000 mL/h/g, and further 1200-15000 mL/h/g, such as 1000 mL/h/g, 1500 mL/h/g, 2000 mL/h/g, 3000 mL/h/g, 5000 mL/h/g, 6000 mL/h/g, 8000 mL/h/g, 10000 mL/h/g, 12000 mL/h/g, or 15000 mL/h/g.

In one embodiment, the first gas in step S2 comprises 1-3 vol% oxygen and 97-99 vol% nitrogen, and the content of oxygen may be, for example, 1.5 vol%, 2 vol%, 2.5 vol%, or 3 vol%.

In one embodiment, the surface passivation treatment in step S2 may be performed at a temperature of 0-40 °C, such as 1 °C, 5 °C, 10 °C, 15 °C, 20 °C, 25 °C, 30 °C, 35 °C, or 40 °C; the treatment may be performed under a pressure of 0-1.5 atm, and further 0-0.09 atm, such as 0.01 atm, 0.02 atm, 0.05 atm, 0.06 atm, 0.08 atm, 1 atm, or 1.5 atm; the treatment may be performed for 2-60 h, and further 3-45 h, such as 8 h, 12 h, 15 h, 20 h, 25 h, 30 h, 35 h, 40 h, 45 h, 50 h, 55 h, or 60 h.

In one embodiment, the gas flow rate of the first gas in step S2 may be 500-20000 mL/h/g, and further 1200-12500 mL/h/g, such as 500 mL/h/g, 1000 mL/h/g, 1500 mL/h/g, 2000 mL/h/g, 3000 mL/h/g, 4000 mL/h/g, 5000 mL/h/g, 6000 mL/h/g, 7000 mL/h/g, 10000 mL/h/g, or 15000 mL/h/g.

In one embodiment, hydrogen and carbon monoxide in the second gas of step S3 may be in a molar ratio of 10:1, 20:1, 30:1, 36:1, 40:1, 50:1, 60:1, or 80:1. The second gas may be a mixture of hydrogen and carbon monoxide.

In one embodiment, the treatment in step S3 may be performed at a temperature of 250-430 °C, such as 280 °C, 300 °C, 320 °C, 330 °C, 350 °C, 380 °C, or 400 °C; the treatment may be performed under a pressure of 0.08-17 atm, and further 0.15-7 atm, such as 0.1 atm, 0.2 atm, 0.5 atm, 0.8 atm, 1 atm, 1.2 atm, 1.5 atm, 1.8 atm, 2 atm, 2.2 atm, 5 atm, 8 atm, 10 atm, or 15 atm; the treatment may be performed for 0.3-24 h, and further 0.5-6 h, such as 1 h, 1.5 h, 1.8 h, 2 h, 2.2 h, 5 h, 10 h, 15 h, or 20 h.

In one embodiment, the gas flow rate of the second gas in step S3 may be 250-21000 mL/h/g, and further 2000-17000 mL/h/g, such as 1000 mL/h/g, 3000 mL/h/g, 5000 mL/h/g, 6000 mL/h/g, 7700 mL/h/g, 8000 mL/h/g, 10000 mL/h/g, 12000 mL/h/g, 15000 mL/h/g, or 16000 mL/h/g.

In one embodiment, in step S3, the temperature of the system is increased from 0-40 °C to 250-430 °C at a heating rate of 0.1-5 °C/min, and further, the temperature of the system is increased from 0-40 °C to 260-400 °C at a heating rate of 0.2-2.5 °C/min; the heating rate in step S3 may be, for example, 0.5 °C/min, 0.8 °C/min, 1 °C/min, 1.2 °C/min, 1.5 °C/min, 1.8 °C/min, 2 °C/min, 2.2 °C/min, 3 °C/min, or 4 °C/min.

In one embodiment, preferably, steps S1, S2, and S3, and the first, second, and third impregnation treatments can all be performed in the dark.

In one embodiment, the preparation method for the χ-iron-carbide composite comprises the following steps:
S0: performing a first impregnation treatment on nanoiron and/or a nano iron compound by an impregnation solution to obtain a precursor to be treated;
S1: performing reduction and surface purification on the precursor at a temperature of 260-470 °C under the action of hydrogen to obtain a reduced product;
S2: performing surface passivation on the reduced product at a temperature of 0-40 °C in a first gas atmosphere to obtain a passivated product; and
S3: treating the passivated product at a temperature of 250-430 °C in a second gas atmosphere to form iron carbide, so as to obtain a product containing iron carbide (i.e., χ-iron-carbide composite).

In another embodiment, the preparation method for the χ-iron-carbide composite comprises the following steps:
S1: performing reduction and surface purification on a precursor (nanoiron and/or a nano iron compound) at a temperature of 260-470 °C under the action of hydrogen to obtain a reduced product;
S2: performing surface passivation on the reduced product at a temperature of 0-40 °C in a first gas atmosphere to obtain a passivated product;
S21: performing a second impregnation treatment on the passivated product in an impregnation solution; and
S3: treating the material after the second impregnation treatment at a temperature of 250-430 °C in a second gas atmosphere to form a product containing iron carbide (i.e., χ-iron-carbide composite).

In another embodiment, the preparation method for the χ-iron-carbide composite comprises the following steps:
S1: performing reduction and surface purification on a precursor (nanoiron and/or a nano iron compound) at a temperature of 260-470 °C under the action of hydrogen to obtain a reduced product;
S2: performing surface passivation on the reduced product at a temperature of 0-40 °C in a first gas atmosphere to obtain a passivated product; and
S3: treating the passivated product at a temperature of 250-430 °C in a second gas atmosphere to form iron carbide, so as to obtain a product containing iron carbide; and
S31: performing a third impregnation treatment on the product containing iron carbide to obtain the χ-iron-carbide composite.

One embodiment of the present disclosure provides a catalyst comprising the χ-iron-carbide composite described above.

One embodiment of the present disclosure provides use of the χ-iron-carbide composite or the catalyst described above in a syngas conversion reaction.

In one embodiment, the syngas conversion reaction may be a Fischer-Tropsch synthesis reaction, or other reactions on the basis of the Fischer-Tropsch synthesis principle, such as a reaction in which the syngas is used as a starting material and the final product is an alcohol.

In one embodiment, the syngas comprises CO and H₂.

One embodiment of the present disclosure provides use of the χ-iron-carbide composite or the catalyst described above in a reaction for the synthesis of C and H fuels and/or chemicals on the basis of the Fischer-Tropsch synthesis principle. The reaction on the basis of the Fischer-Tropsch synthesis principle refers to a reaction in which chain hydrocarbons and/or oxygen-containing derivatives thereof are generated by CO hydrogenation and carbon chain growth reactions using syngas (a mixed gas of CO and H₂) as a starting material in the presence of a catalyst and under appropriate conditions.

In one embodiment, the reaction described above is a Fischer-Tropsch synthesis reaction, and the reaction may be performed at a temperature of 230-280 °C, such as 240 °C, 250 °C, 260 °C, 270 °C, 275 °C, or 277 °C; the reaction may be performed under a pressure of 2-3.5 MPa; and the molar ratio of H₂/CO may be 1.7-2.15.

One embodiment of the present disclosure provides a syngas conversion process, comprising contacting the catalyst described above with syngas under syngas conversion reaction conditions.

In one embodiment, the syngas conversion may be performed in a high-temperature and high-pressure continuous reactor.

The χ-iron-carbide composite according to one embodiment of the present disclosure may be used as a catalyst for a syngas conversion reaction. By introducing halide ions into the χ-iron-carbide, the reaction has a relatively high CO conversion rate, extremely low overall CO₂ selectivity, and low CH₄ selectivity. Meanwhile, benefiting from the very high CO space-time conversion rate of the χ-iron-carbide composite catalyst, the χ-iron-carbide composite exhibits considerable activity.

The χ-iron-carbide composite according to one embodiment of the present disclosure may be used as a catalyst for a syngas conversion reaction, and can enable the reaction to maintain extremely low CO₂ selectivity at a high CO conversion rate, while also maintaining low CH₄ selectivity and relatively high reaction stability, thereby greatly improving the utilization efficiency of carbon atoms and the effective product selectivity, overcoming the key technical bottleneck, promoting the high-end, diversified, and low-carbon development of the clean conversion of syngas, and indicating a new trend and direction for the development of modern syngas chemical industry.

The χ-iron-carbide composite according to one embodiment of the present disclosure, as a catalyst for a Fischer-Tropsch synthesis reaction, can be subjected to a continuous and stable reaction for 300 h or more in a high-pressure continuous reactor under industrial Fischer-Tropsch synthesis reaction conditions, and the CO₂ selectivity is 5% or less, and further 3% or less; the selectivity of the by-product CH₄ may be maintained at 8.5% or less, and further 5.5% or less; the utilization efficiency of carbon atoms is maintained at 95% or more, and further 97% or more; and the effective product selectivity may reach 86.5% or more, and further 92% or more.

In one embodiment, the Fischer-Tropsch synthesis reaction catalyzed by the χ-iron-carbide composite may achieve CO₂ selectivity of < 5%, utilization efficiency of carbon atoms of > 95%, and effective product selectivity of > 88% at a CO conversion rate of 70% or more.

As used herein, the "ion" comprised in the composite includes all particles that are bound to other particles by covalent bonds and/or ionic bonds. For example, the bromide ion in the composite includes both Br⁻ that interacts with K⁺ via an ionic bond and a Br atom that interacts with an H atom via a covalent bond.

All pressure values involved herein are gauge pressures.

Hereinafter, the χ-iron-carbide composite according to one embodiment of the present disclosure and use thereof are further described with reference to the accompanying drawing and specific examples. The test methods involved are as follows:
1. The crystal structure and corresponding composition of the χ-iron-carbide composite were determined by a Mössbauer spectrometer (Transmission ⁵⁷Fe spectrometer, ⁵⁷Co(Rh) source, sinusoidal velocity mode).
2. The average crystal grain diameter of the χ-iron-carbide composite was obtained by XRD testing.
3. Elemental detection was performed on the χ-iron-carbide composite using an inductive coupled plasma emission spectrometer (ICP).
4. In the process of the syngas conversion reaction, the product obtained from the reaction was subjected to gas chromatography analysis (Agilent 7890 gas chromatograph) for the calculation of reaction performance such as conversion rate and selectivity, where the product refers to the tail gas collected from the tail end of the reactor, including generated hydrocarbon compounds, alcohol compounds, CO₂, etc.
5. The CO conversion rate%, CO₂ selectivity%, CH₄ selectivity%, utilization efficiency of carbon atoms%, and effective product selectivity% were calculated by the following formulas: 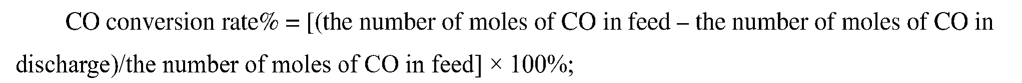 CO conversion rate% = [(the number of moles of CO in feed - the number of moles of CO in discharge)/the number of moles of CO in feed] × 100%; 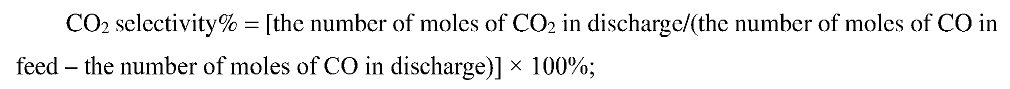 CO2 selectivity% = [the number of moles of CO2 in discharge/(the number of moles of CO in feed - the number of moles of CO in discharge)] × 100%; 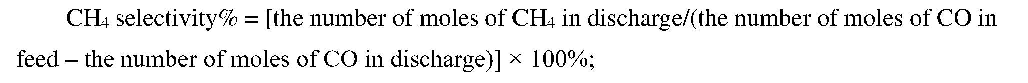 CH4 selectivity% = [the number of moles of CH4 in discharge/(the number of moles of CO in feed - the number of moles of CO in discharge)] × 100%;
   $utilization efficiency of carbon atoms % = \left(1-{CO}_{2} selectivity%\right) \times 100 % ;$
   $effective product selectivity % = \left(1-{CO}_{2} selectivity%-{CH}_{4} selectivity%\right) \times 100 % .$

### EXAMPLES

### Example 1

S1: 5.6 g of nanoiron particles having an average crystal grain diameter of 20 nm were weighed out, and at 370 °C and under a pressure of 2.0 atm, the nanoiron particles were kept in H₂ at a flow rate of 12000 mL/h/g for 2 h for reduction and surface purification to obtain a reduced product.

S2: The reduced product was cooled to 30 °C, and subjected to surface passivation treatment by contacting it with a first gas at this temperature to obtain a passivated product, where the pressure of the system was 0.1 atm, the gas flow rate was 7500 mL/h/g, and the treatment time was 12 h; the first gas comprised 2 vol% oxygen and 98 vol% nitrogen.

S21: Manganese bromide and potassium nitrate were dissolved in water to prepare an impregnation solution, with the concentration of manganese bromide being 6.7 mol/L; the prepared impregnation solution was mixed with the passivated product, and an impregnation treatment was performed by a slurry impregnation method at an impregnation ratio of Fe:Br:K = 100:7:2 and at an impregnation temperature of 32 °C for 2 h; and the impregnated solid material was dried at 25 °C for 6 h.

S3: The material after the impregnation treatment was in contact with a second gas atmosphere, the pressure of the system was 2.1 atm, the total gas flow rate was 11000 mL/h/g, and the system was heated from 30 °C to 350 °C at a heating rate of 2.0 °C/min under these conditions to prepare a carbide, where the second gas was a mixed gas of H₂ and CO, the molar ratio of H₂ to CO was 50:1, and the material was treated at 350 °C for 5 h. After the treatment was completed, a χ-iron-carbide composite was prepared and labeled as CX1.

The metallic χ-iron-carbide composites in Examples 1-1 to 3-8 were all prepared using substantially the same starting materials and process as in Example 1, the only difference being that the content or type of halide ions or the additional cation in the impregnation solution was different. The prepared composites were sequentially labeled as CX1-1 to CX3-8 using the same numbering as in Example 1. Due to the minimal loss of materials during preparation, the content of each substance in the prepared composites was substantially the same as the amount of the corresponding starting material. The specific content values are shown in Table 1.

### Example 4

S1: 8.0 g of nano iron oxide particles having an average crystal grain diameter of 15 nm were weighed out, and at 420 °C and under a pressure of 3.0 atm, the nano iron oxide particles were kept in H₂ at a flow rate of 8000 mL/h/g for 3 h for reduction and surface purification to obtain a reduced product.

S2: The reduced product was cooled to 35 °C, and subjected to surface passivation treatment by contacting it with a first gas at this temperature to obtain a passivated product, where the pressure of the system was 0.5 atm, the gas flow rate was 9500 mL/h/g, and the treatment time was 9 h; the first gas comprised 1.5 vol% oxygen and 98.5 vol% nitrogen.

S21: Manganese bromide, potassium citrate, and calcium nitrate were dissolved in water to prepare an impregnation solution, with the concentration of manganese bromide being 5.5 mol/L; the prepared impregnation solution was mixed with the passivated product, and an impregnation treatment was performed by a slurry impregnation method at an impregnation ratio (molar ratio) of Fe:Br:K:Ca = 100:7:3:2.7 and at an impregnation temperature of 37 °C for 3 h; and the impregnated solid material was dried at 25 °C for 5 h.

S3: The material after the impregnation treatment was in contact with a second gas atmosphere, the pressure of the system was 3.6 atm, the total gas flow rate was 7700 mL/h/g, and the system was heated from 35 °C to 330 °C at a heating rate of 2.0 °C/min under these conditions to prepare a carbide, where the second gas was a mixed gas of H₂ and CO, the molar ratio of H₂ to CO was 36:1, and the material was treated at 330 °C for 5 h; after the treatment was completed, a χ-iron-carbide composite was prepared and labeled as CX4.

### Example 4-1

In this example, the χ-iron-carbide composite was prepared using substantially the same starting materials and process as in Example 1, the only difference being that in step S1, the flow rate of H₂ was 1200 mL/h/g. The finally prepared χ-iron-carbide composite was labeled as CX4-1.

### Example 4-2

In this example, the χ-iron-carbide composite was prepared using substantially the same starting materials and process as in Example 1, the only difference being that in step S1, the flow rate of H₂ was 15000 mL/h/g. The finally prepared χ-iron-carbide composite was labeled as CX4-2.

### Example 4-3

In this example, the χ-iron-carbide composite was prepared using substantially the same starting materials and process as in Example 1, the only difference being that in step S1, the flow rate of H₂ was 9000 mL/h/g. The finally prepared χ-iron-carbide composite was labeled as CX4-3.

### Example 4-4

In this example, the χ-iron-carbide composite was prepared using substantially the same starting materials and process as in Example 1, the only difference being that the carbonization temperature in step S3 was 430 °C. The finally prepared χ-iron-carbide composite was labeled as CX4-4.

### Example 4-5

In this example, the χ-iron-carbide composite was prepared using substantially the same starting materials and process as in Example 1, the only difference being that the carbonization temperature in step S3 was 250 °C. The finally prepared χ-iron-carbide composite was labeled as CX4-5.

### Example 4-6

In this example, the χ-iron-carbide composite was prepared using substantially the same starting materials and process as in Example 1, the only difference being that the carbonization temperature in step S3 was 360 °C. The finally prepared χ-iron-carbide composite was labeled as CX4-6.

### Example 4-7

In this example, the χ-iron-carbide composite was prepared using substantially the same starting materials and process as in Example 1, the only difference being that the reduction temperature in step S1 was 470 °C. The finally prepared χ-iron-carbide composite was labeled as CX4-7.

### Example 4-8

In this example, the χ-iron-carbide composite was prepared using substantially the same starting materials and process as in Example 1, the only difference being that the carbonization pressure in step S3 was 7 atm. The finally prepared χ-iron-carbide composite was labeled as CX4-8.

### Example 4-9

In this example, the χ-iron-carbide composite was prepared using substantially the same starting materials and process as in Example 1, the only difference being that the reduction time in step S1 was 12 h. The finally prepared χ-iron-carbide composite was labeled as CX4-9.

### Example 4-10

In this example, the χ-iron-carbide composite was prepared using substantially the same starting materials and process as in Example 1, the only difference being that the carbonization time in step S3 was 6 h. The finally prepared χ-iron-carbide composite was labeled as CX4-10.

### Example 4-11

In this example, the χ-iron-carbide composite was prepared using substantially the same starting materials and process as in Example 1, the only difference being that the reduction pressure in step S1 was 7.0 atm. The finally prepared χ-iron-carbide composite was labeled as CX4-11.

### Example 4-12

In this example, the χ-iron-carbide composite was prepared using substantially the same starting materials and process as in Example 1, the only difference being that the passivation time in step S2 was 45 h. The finally prepared χ-iron-carbide composite was labeled as CX4-12.

### Example 5

S0: 5.6 g of nanoiron particles having an average crystal grain diameter of 20 nm was weighed out; an impregnation solution was prepared using the same starting materials and method as in Example 1; the impregnation solution was mixed with the nanoiron particles, and an impregnation treatment was performed by a slurry impregnation method at an impregnation ratio (molar ratio) of Fe:Br:K = 100:7:2 and at an impregnation temperature of 35 °C for 6 h; and the impregnated solid material was dried at 25 °C and under a pressure of 0.05 atm for 5 h to obtain a precursor.

S1: At 370 °C and under a pressure of 2.0 atm, the precursor prepared in step S0 was kept in H₂ at a flow rate of 12000 mL/h/g for 2 h for reduction and surface purification treatment to obtain a reduced product.

S2: The reduced product was cooled to 30 °C, and subjected to surface passivation treatment by contacting it with a first gas at this temperature to obtain a passivated product, where the pressure of the system was 0.1 atm, the gas flow rate was 7500 mL/h/g, and the treatment time was 12 h; the first gas comprised 2 vol% oxygen and 98 vol% nitrogen.

S3: The passivated product was in contact with a second gas atmosphere, the pressure of the system was 2.1 atm, the total gas flow rate was 11000 mL/h/g, and the system was heated from 30 °C to 350 °C at a heating rate of 2.0 °C/min under these conditions to prepare a carbide, where the second gas was a mixed gas of H₂ and CO, the molar ratio of H₂ to CO was 50:1, and the material was treated at 350 °C for 5 h; after the treatment was completed, a χ-iron-carbide composite was prepared and labeled as CX5.

### Example 6

S1: 5.6 g of nanoiron particles having an average crystal grain diameter of 20 nm were weighed out, and at 370 °C and under a pressure of 2.0 atm, the nanoiron particles were kept in H₂ at a flow rate of 12000 mL/h/g for 2 h for reduction and surface purification to obtain a reduced product.

S2: The reduced product was cooled to 30 °C, and subjected to surface passivation treatment by contacting it with a first gas at this temperature to obtain a passivated product, where the pressure of the system was 0.1 atm, the gas flow rate was 7500 mL/h/g, and the treatment time was 12 h; the first gas comprised 2 vol% oxygen and 98 vol% nitrogen.

S3: The passivated product was in contact with a second gas atmosphere, the pressure of the system was 2.1 atm, the total gas flow rate was 11000 mL/h/g, and the system was heated from 30 °C to 350 °C at a heating rate of 2.0 °C/min under these conditions to prepare a carbide, where the second gas was a mixed gas of H₂ and CO, the molar ratio of H₂ to CO was 50:1, and the material was treated at 350 °C for 5 h. After the treatment was completed, a product containing iron carbide was prepared.

S31: An impregnation solution was prepared using the same starting materials and method as in Example 1; the impregnation solution was mixed with the product containing iron carbide, and an impregnation treatment was performed by a slurry impregnation method at an impregnation ratio (molar ratio) of Fe:Br:K = 100:7.0:2.0 and at an impregnation temperature of 32 °C for 2 h; and the impregnated solid material was dried at 25 °C for 9 h. A χ-iron-carbide composite was prepared and labeled as CX6.

### Comparative Example 1

In this example, the χ-iron-carbide composite was prepared using substantially the same starting materials and process as in Example 1, the only difference being that in step S21, the impregnation ratio (molar ratio) was Fe:Br:K = 100:50.0:2.0. The finally prepared χ-iron-carbide composite was labeled as DX1.

### Comparative Example 2

In this example, the χ-iron-carbide composite was prepared using substantially the same starting materials and process as in Example 1, the only difference being that in the preparation of the impregnation solution in step S21, manganese bromide was not added. The impregnation treatment was performed on the nanoiron particles using the impregnation solution. The finally prepared χ-iron-carbide composite was labeled as D2.

### Comparative Example 3

In this example, the χ-iron-carbide composite was prepared using substantially the same starting materials and process as in Example 1, the only difference being that in the preparation of the impregnation solution in step S21, manganese bromide was replaced by manganese chloride in an equivalent amount. The finally prepared χ-iron-carbide composite was labeled as DX3.

### Comparative Example 4

The χ-iron-carbide labeled as D4 was prepared using the same starting materials and procedures as in steps S1 to S3 of Example 1 without the impregnation procedure in S21.

### Comparative Example 5

In this example, the χ-iron-carbide composite was prepared using substantially the same starting materials and process as in Example 1, the only difference being that in step S3, the mixed gas of H₂ and CO in the second gas atmosphere was in a ratio of 120:1. The finally prepared χ-iron-carbide composite was labeled as DX5.

The χ-iron-carbide composites and χ-iron-carbides prepared in the examples and comparative examples were subjected to XRD, Mössbauer spectrometry, and ICP measurements, where the contents of the χ-iron-carbides are all calculated as 100 mol, and the related contents all refer to the number of moles. The specific results are shown in Table 1.

The catalytic reaction performance of the χ-iron-carbide composites, χ-iron-carbides, and the like prepared in the examples and comparative examples was evaluated in a slurry bed continuous reactor. The loading amount of the catalyst was 9.0 g. Evaluation conditions: T = 277 °C; P = 2.75 MPa; H₂:CO = 2.1:1; total amount of (H₂+CO) = 14500 mL/h/g-_{Fe} (standard state flow rate, relative to the Fe element); cycle ratio: 1.2. The reaction was performed, and the reaction products were analyzed by gas chromatography. The evaluation data of the reaction performance after reaction for 24 h and 300 h are shown in Tables 2 and 3.

**Table 1**

| Sample | Content of χ-iron-carbide | Halide ion | | Additional cation | | Crystal grain diameter (nm) | Additional iron element | Halide |
|---|---|---|---|---|---|---|---|---|
| | | Type | Content | Type | Content | | | |
| CX1 | 100 | Br⁻ | 7 | K⁺ | 2 | 20 | 0 | Manganese bromide |
| CX1-1 | 100 | Br⁻ | 7 | K⁺ | 2 | 21 | 0 | Iron(II) bromide |
| CX1-2 | 100 | Br⁻ | 0.3 | K⁺ | 2 | 19 | 0 | Copper bromide |
| CX1-3 | 100 | Br⁻ | 10 | K⁺ | 2 | 19 | 0 | Zinc bromide |
| CX1-4 | 100 | Br⁻ | 20 | K⁺ | 2 | 22 | 0 | Molybdenum bromide |
| CX1-5 | 100 | Br⁻ | 35 | K⁺ | 2 | 20 | 0 | Manganese bromide |
| CX1-6 | 100 | Br⁻ | 40 | K⁺ | 2 | 21 | 0 | Manganese bromide |
| CX1-7 | 100 | Br⁻ | 44 | K⁺ | 2 | 22 | 0 | Manganese bromide |
| CX2 | 100 | I⁻ | 0.3 | K⁺ | 2 | 19 | 0 | Manganese iodide |
| CX2-1 | 100 | I⁻ | 44 | K⁺ | 2 | 20 | 0 | Manganese iodide |
| CX3 | 100 | Br⁻ | 7 | / | 0 | 20 | 0 | Manganese bromide |
| CX3-1 | 100 | Br⁻ | 7 | K⁺ | 0.1 | 21 | 0 | Manganese bromide |
| CX3-2 | 100 | Br⁻ | 7 | K⁺ | 5 | 20 | 0 | Manganese bromide |
| CX3-3 | 100 | Br⁻ | 7 | K⁺ | 10 | 21 | 0 | Manganese bromide |
| CX3-4 | 100 | Br⁻ | 7 | Cu²⁺ | 18 | 20 | 0 | Manganese bromide |
| CX3-5 | 100 | Br⁻ | 7 | Mn²⁺ | 22 | 20 | 0 | Manganese bromide |
| CX3-6 | 100 | Br⁻ | 7 | Na⁺ | 5 | 20 | 0 | Manganese bromide |
| CX3-7 | 100 | Br⁻ | 7 | Zn²⁺ | 12 | 21 | 0 | Manganese bromide |
| CX3-8 | 100 | Br⁻ | 7 | Ca²⁺ | 3 | 21 | 0 | Manganese bromide |
| CX4 | 100 | Br⁻ | 7 | K⁺ Ca²⁺ | 3 2.7 | 16 | 0 | Manganese bromide |
| CX4-1 | 100 | Br⁻ | 7 | K⁺ | 2 | 22 | 0 | Manganese bromide |
| CX4-2 | 100 | Br⁻ | 7 | K⁺ | 2 | 20 | 0 | Manganese bromide |
| CX4-3 | 100 | Br⁻ | 7 | K⁺ | 2 | 21 | 0 | Manganese bromide |
| CX4-4 | 100 | Br⁻ | 7 | K⁺ | 2 | 23 | 0 | Manganese bromide |
| CX4-5 | 100 | Br⁻ | 7 | K⁺ | 2 | 22 | 0 | Manganese bromide |
| CX4-6 | 100 | Br⁻ | 7 | K⁺ | 2 | 22 | 0 | Manganese bromide |
| CX4-7 | 100 | Br⁻ | 7 | K⁺ | 2 | 21 | 0 | Manganese bromide |
| CX4-8 | 100 | Br⁻ | 7 | K⁺ | 2 | 20 | 0 | Manganese bromide |
| CX4-9 | 100 | Br⁻ | 7 | K⁺ | 2 | 21 | 0 | Manganese bromide |
| CX4-10 | 100 | Br⁻ | 7 | K⁺ | 2 | 20 | 0 | Manganese bromide |
| CX4-11 | 100 | Br⁻ | 7 | K⁺ | 2 | 20 | 0 | Manganese bromide |
| CX4-12 | 100 | Br⁻ | 7 | K⁺ | 2 | 20 | 0 | Manganese bromide |
| CX5 | 100 | Br⁻ | 7 | K⁺ | 2 | 20 | 0 | Manganese bromide |
| CX6 | 100 | Br⁻ | 7 | K⁺ | 2 | 20 | 0 | Manganese bromide |
| DX1 | 75 | Br⁻ | 66.7 | K⁺ | 2.7 | 24 | 25 | Manganese bromide |
| D2 | 100 | / | 0 | K⁺ | 2 | 20 | 0 | / |
| DX3 | 100 | Cl⁻ | 7 | K⁺ | 2 | 21 | 0 | Manganese chloride |
| D4 | 100 | / | 0 | / | 0 | 20 | 0 | / |
| DX5 | 67 | Br⁻ | 10.4 | K⁺ | 3.0 | 21 | 33 | Manganese bromide |

**Table 2**

| Sample No. | Data after reaction for 24 h | | | | |
|---|---|---|---|---|---|
| | CO conversion rate (%) | CO₂ selectivity (%) | CH₄ selectivity (%) | Utilization efficiency of carbon atoms (%) | Effective product selectivity (%) |
| CX1 | 81.8 | 2.3 | 4.2 | 97.7 | 93.5 |
| CX1-1 | 82.6 | 2.8 | 4.0 | 97.2 | 93.2 |
| CX1-2 | 72.1 | 3.9 | 4.8 | 96.1 | 91.3 |
| CX1-3 | 83.6 | 3.0 | 4.3 | 97.0 | 92.7 |
| CX1-4 | 83.3 | 2.6 | 4.0 | 97.4 | 93.4 |
| CX1-5 | 71.3 | 3.7 | 4.9 | 96.3 | 91.3 |
| CX1-6 | 72.1 | 3.9 | 5.2 | 96.1 | 90.9 |
| CX1-7 | 72.4 | 3.9 | 4.4 | 96.1 | 91.7 |
| CX2 | 71.8 | 3.3 | 4.9 | 96.7 | 91.8 |
| CX2-1 | 72.0 | 3.2 | 5.1 | 96.8 | 91.7 |
| CX3 | 70.6 | 3.6 | 7.1 | 96.4 | 89.3 |
| CX3-1 | 80.5 | 2.7 | 5.9 | 97.3 | 91.4 |
| CX3-2 | 82.5 | 2.2 | 4.3 | 97.8 | 93.5 |
| CX3-3 | 83.7 | 2.5 | 4.0 | 97.5 | 93.4 |
| CX3-4 | 71.6 | 3.8 | 6.7 | 96.2 | 89.4 |
| CX3-5 | 72.0 | 3.1 | 7.2 | 96.9 | 89.7 |
| CX3-6 | 84.2 | 2.3 | 4.3 | 97.7 | 93.4 |
| CX3-7 | 83.7 | 2.9 | 5.5 | 97.1 | 91.5 |
| CX3-8 | 84.3 | 3.0 | 4.6 | 97.0 | 92.4 |
| CX4 | 81.9 | 2.8 | 4.3 | 97.2 | 92.9 |
| CX4-1 | 71.8 | 3.6 | 5.2 | 96.4 | 91.3 |
| CX4-2 | 73.2 | 3.9 | 5.0 | 96.1 | 91.1 |
| CX4-3 | 83.8 | 2.8 | 4.0 | 97.2 | 93.1 |
| CX4-4 | 71.6 | 3.5 | 4.2 | 96.5 | 92.2 |
| CX4-5 | 72.3 | 3.4 | 4.5 | 96.6 | 92.1 |
| CX4-6 | 84.5 | 2.4 | 4.0 | 97.6 | 93.6 |
| CX4-7 | 72.5 | 3.7 | 4.6 | 96.3 | 91.8 |
| CX4-8 | 71.8 | 3.8 | 4.9 | 96.2 | 91.3 |
| CX4-9 | 71.1 | 3.6 | 4.9 | 96.4 | 91.5 |
| CX4-10 | 71.7 | 3.2 | 4.6 | 96.8 | 92.2 |
| CX4-11 | 72.8 | 3.8 | 4.7 | 96.2 | 91.4 |
| CX4-12 | 71.4 | 3.2 | 4.6 | 96.8 | 92.2 |
| CX5 | 83.2 | 2.1 | 4.0 | 97.9 | 93.9 |
| CX6 | 81.4 | 2.5 | 4.1 | 97.5 | 93.5 |
| DX1 | 38.6 | 12.4 | 17.3 | 87.6 | 70.3 |
| D2 | 92.9 | 38.7 | 3.8 | 61.3 | 57.4 |
| DX3 | 78.9 | 14.8 | 4.7 | 85.2 | 80.4 |
| D4 | 84.8 | 20.5 | 9.7 | 79.5 | 69.9 |
| DX5 | 60.0 | 7.7 | 9.0 | 92.3 | 83.3 |

**Table 3**

| Sample No. | Data after reaction for 300 h | | | | |
|---|---|---|---|---|---|
| | CO conversion rate (%) | CO₂ selectivity (%) | CH₄ selectivity (%) | Utilization efficiency of carbon atoms (%) | Effective product selectivity (%) |
| CX1 | 81.3 | 3.4 | 4.7 | 96.6 | 91.9 |
| CX1-1 | 82.0 | 3.4 | 5.8 | 96.6 | 90.9 |
| CX1-2 | 72.3 | 3.5 | 5.1 | 96.5 | 91.4 |
| CX1-3 | 83.4 | 3.0 | 4.2 | 97.0 | 92.8 |
| CX1-4 | 82.0 | 3.1 | 4.4 | 96.9 | 92.5 |
| CX1-5 | 70.8 | 3.8 | 4.9 | 96.2 | 91.3 |
| CX1-6 | 70.3 | 4.1 | 5.3 | 95.9 | 90.6 |
| CX1-7 | 72.3 | 4.3 | 5.0 | 95.7 | 90.7 |
| CX2 | 71.0 | 4.2 | 4.6 | 95.8 | 91.1 |
| CX2-1 | 69.2 | 4.2 | 5.0 | 95.8 | 90.7 |
| CX3 | 72.5 | 3.4 | 8.5 | 96.6 | 88.2 |
| CX3-1 | 79.9 | 2.6 | 6.0 | 97.4 | 91.4 |
| CX3-2 | 81.2 | 3.2 | 5.2 | 96.8 | 91.6 |
| CX3-3 | 83.3 | 3.3 | 5.3 | 96.7 | 91.4 |
| CX3-4 | 69.8 | 4.3 | 7.6 | 95.7 | 88.2 |
| CX3-5 | 71.7 | 3.4 | 7.6 | 96.6 | 89.0 |
| CX3-6 | 81.9 | 3.2 | 4.3 | 96.8 | 92.5 |
| CX3-7 | 81.0 | 4.0 | 6.2 | 96.0 | 89.8 |
| CX3-8 | 82.3 | 3.4 | 4.5 | 96.6 | 92.2 |
| CX4 | 83.1 | 2.8 | 4.5 | 97.2 | 92.7 |
| CX4-1 | 70.5 | 4.3 | 5.3 | 95.7 | 90.4 |
| CX4-2 | 69.6 | 3.9 | 5.1 | 96.1 | 91.0 |
| CX4-3 | 81.5 | 3.2 | 4.6 | 96.8 | 92.2 |
| CX4-4 | 72.6 | 4.2 | 5.0 | 95.8 | 90.8 |
| CX4-5 | 70.3 | 3.1 | 4.7 | 96.9 | 92.2 |
| CX4-6 | 80.5 | 3.1 | 5.1 | 96.9 | 91.8 |
| CX4-7 | 69.6 | 3.6 | 4.8 | 96.4 | 91.6 |
| CX4-8 | 81.9 | 2.3 | 5.3 | 97.7 | 92.4 |
| CX4-9 | 71.3 | 4.3 | 5.0 | 95.7 | 90.7 |
| CX4-10 | 69.9 | 3.6 | 4.8 | 96.4 | 91.6 |
| CX4-11 | 71.7 | 4.3 | 5.8 | 95.7 | 89.9 |
| CX4-12 | 71.5 | 4.1 | 5.6 | 95.9 | 90.2 |
| CX5 | 82.1 | 3.4 | 4.7 | 96.6 | 91.9 |
| CX6 | 79.4 | 2.4 | 5.0 | 97.6 | 92.6 |
| DX1 | 24.5 | 36.1 | 23.2 | 63.9 | 40.7 |
| D2 | 86.8 | 39.3 | 4.0 | 60.7 | 56.7 |
| DX3 | 78.7 | 17.7 | 5.4 | 82.3 | 76.9 |
| D4 | 84.2 | 19.3 | 9.2 | 80.7 | 71.5 |
| DX5 | 45.3 | 14.2 | 15.0 | 85.8 | 70.8 |

It can be seen from the results of the examples, the comparative examples, and Tables 1-3 that, compared with Example 1, the impregnation solution in Comparative Example 2 did not contain manganese bromide, indicating that the composite prepared in Comparative Example 2 did not contain manganese ions and bromide ions. The results in Table 2 show that although the CO conversion rate in Comparative Example 2 was higher than that in Example 1, the CO₂ selectivity of 38.7% in Comparative Example 2 was much higher than the CO₂ selectivity of 2.3% in Example 1, and the utilization efficiency of carbon atoms (61.3%) and the effective product selectivity (57.4%) in Comparative Example 2 were much lower than the utilization efficiency of carbon atoms (97.7%) and the effective product selectivity (93.5%) in Example 1. Therefore, compared with the composite in Comparative Example 2, the composite in Example 1 can improve the overall efficiency of the reaction and optimize the comprehensive results of the reaction.

Further, Example 1-1 differs from Example 1 in that the halide used was different, which was iron(II) bromide. The results in Table 2 show that the reaction performance data of Example 1-1 were not greatly different from that of Example 1, indicating that, compared with Comparative Example 2, the improvement in performance of Example 1 is mainly brought by the addition of bromide ions rather than manganese ions.

Furthermore, Example 2 mainly differs from Example 1-2 in that iodide ions, rather than bromide ions, were introduced into the prepared composite. The results in Table 2 show that the reaction performance data of Example 2 were not greatly different from that of Example 1-2, indicating that the introduction of iodide ions into the iron carbide can also play a role in improving the comprehensive performance of the reaction. In addition, Comparative Example 3 differs from Example 1 in that chloride ions, rather than bromide ions, were introduced into the prepared composite. The results in Table 2 show that all the reaction performances of Comparative Example 3 were significantly lower than those of Example 1, and the optimization of the comprehensive results of the reaction could not be achieved.

Furthermore, bromide ions were also introduced into the iron carbide in Comparative Example 1, but the content of bromide ions was higher, which is beyond the range of the molar ratio of 100:(0.1-45) of χ-iron-carbide to halide ions defined in one embodiment of the present disclosure. As can be seen from the results in Table 2, the CO conversion rate in Comparative Example 1 was only 38.6%, which was much lower than the CO conversion rate of 81.8% in Example 1, and the utilization efficiency of carbon atoms and the effective product selectivity in Comparative Example 1 were also significantly lower than those in Example 1. Therefore, when the content of bromide ions in the iron carbide composite exceeds a certain range, comprehensive optimization of the reaction results cannot be achieved either.

Furthermore, Examples 1 to 1-7 mainly differ from each other in the content of bromide ions, and combined with the results in Tables 2 and 3, the molar ratio of iron carbide (or iron element) to bromide ions in the prepared composite was preferably 100:(7-20).

Furthermore, Examples 3 to 3-8 mainly differ from each other in the content of the additional cation, and combined with the results in Tables 2 and 3, the molar ratio of iron carbide (or iron element) to the additional cation in the prepared composite was preferably 100:(0.1-12).

In addition, as can be seen from the results in Table 3, the reactions catalyzed by the composites in the examples of the present disclosure were able to maintain the CO conversion rate, product selectivity, etc., stable for a relatively long period of time. Therefore, by allowing the χ-iron-carbide composite to contain halide ions, such as bromide or iodide ions, limiting the content of halide ions to a specific range, and using the χ-iron-carbide composite as a catalyst for the Fischer-Tropsch synthesis reaction, the overall efficiency of the reaction can be improved, and the optimization of the comprehensive results of the reaction can be achieved.

Based on the above description, the χ-iron-carbide composites containing halide ions, such as bromide or iodide ions, prepared in the examples of the present disclosure are used as a catalyst for the syngas conversion reaction under industrial conditions, and can exhibit extremely low CO₂ selectivity, relatively low CH₄ selectivity, and extremely high utilization efficiency of carbon atoms and effective product selectivity while maintaining a high CO conversion rate (> 60%). A long-period experiment was further performed, and it can be seen from the data after reaction for 300 h in Table 3 that after the χ-iron-carbide composites in the examples of the present disclosure were continuously operated as a catalyst in a stirred tank for a long period, the CO conversion rate, the product selectivity, the utilization efficiency of carbon atoms, and the effective product selectivity all remained stable and did not change significantly, indicating good operation stability. Therefore, by using the χ-iron-carbide composites in the examples of the present disclosure as a catalyst for the syngas conversion reaction, the comprehensive optimization of the reaction results can be achieved.

Unless otherwise defined, all terms used herein have the meanings commonly understood by those skilled in the art.

The embodiments described in the present disclosure are for illustrative purposes only and are not intended to limit the scope of the present disclosure, and various other substitutions, alterations, and modifications may be made by those skilled in the art within the scope of the present disclosure. Therefore, the present disclosure is not limited to the embodiments described above, but is limited only by the claims.

## Claims

1. A χ-iron-carbide composite, comprising iron carbide and a halide ion, the iron carbide comprises χ-iron-carbide, and the halide ion is a bromide ion and/or an iodide ion; the χ-iron-carbide and the halide ion are in a molar ratio of 100:(0.1-45); the number of moles of the χ-iron-carbide is based on the number of moles of an iron element contained therein;
the composite has a monoclinic crystal structure.

2. The composite according to claim 1, comprising a first cation, the first cation comprises an additional cation, and the χ-iron-carbide and the additional cation are in a molar ratio of 100:(0.1-23), and may further be in a molar ratio of 100:(0.1-17); and/or
the composite has an average crystal grain diameter of 6-35 nm.

3. The composite according to claim 2, wherein the first cation comprises a halide cation, and the halide cation is capable of maintaining charge balance with the halide ion; and/or
the χ-iron-carbide and the halide ion are in a molar ratio of 100:(0.5-27); and/or
the composite further comprises an additional anion, and the additional cation is capable of maintaining charge balance with the additional anion.

4. The composite according to claim 3, wherein the halide cation comprises one or more of a first metal ion and a complex cation; and/or
the additional cation comprises one or more of second metal ions, and the second metal ion comprises one or more of a manganese ion, a copper ion, a cobalt ion, a molybdenum ion, a chromium ion, a rare earth ion, an alkali metal ion, and an alkaline earth metal ion; and/or
the additional anion comprises one or more of an oxygen ion, a complex ion, and an acid radical ion.

5. The composite according to claim 4, wherein the first metal ion comprises one or more of an iron ion, a manganese ion, a copper ion, a cobalt ion, a molybdenum ion, and a rare earth ion; the complex cation comprises one or more of a hexaammine manganese ion, a hexaammine iron ion, and a hexaammine copper ion; and/or
the additional cation comprises one or more of a manganese ion, a copper ion, a cobalt ion, a molybdenum ion, a chromium ion, a lanthanum ion, a cerium ion, a neodymium ion, a sodium ion, a potassium ion, a calcium ion, and a barium ion; and/or
the additional anion comprises one or more of an oxygen ion, nitrate, citrate, and gluconate.

6. A preparation method for the χ-iron-carbide composite according to any one of claims 1 to 5, comprising the following steps:
S1: performing reduction and surface purification treatment on a precursor at a temperature of 260 °C to 470 °C under the action of hydrogen to obtain a reduced product;
S2: performing surface passivation treatment on the reduced product at a temperature of 0 °C to 40 °C in a first gas atmosphere to obtain a passivated product; and
S3: treating the passivated product at a temperature of 250 °C to 430 °C in a second gas atmosphere to form a product containing iron carbide;
wherein the first gas comprises 1 vol% to 3 vol% oxygen; the second gas comprises hydrogen and carbon monoxide, and hydrogen and carbon monoxide are in a molar ratio of (8-90):1;
the precursor is nanoiron and/or a nano iron compound subjected to a first impregnation treatment by an impregnation solution, and the nano iron compound is capable of preparing nanoiron by a reduction reaction; or
the precursor is the nanoiron and/or the nano iron compound, and the passivated product is subjected to a second impregnation treatment in the impregnation solution before the treatment in step S3; or
the precursor is the nanoiron and/or the nano iron compound, and the product containing iron carbide is subjected to a third impregnation treatment by the impregnation solution; the impregnation solution comprises bromide ions and/or iodide ions.

7. The preparation method according to claim 6, wherein the nano iron compound comprises one or more of nano iron oxide, nano magnetite, nano goethite, and nano iron hydrous oxide; and/or
the impregnation solution is prepared by dissolving a solute in a solvent, the solute comprises a halide, and the halide comprises a bromide and/or an iodide; and/or
the material after the first impregnation treatment, the second impregnation treatment, or the third impregnation treatment is dried at 15-40 °C.

8. The preparation method according to claim 7, wherein the halide comprises one or more of a bromide and an iodide containing manganese, iron, copper, cobalt, molybdenum, and a rare earth metal element; and/or
the solvent comprises water and/or ethanol; and/or
the concentration of the halide in the impregnation solution is 0.7-7 mol/L; and/or
the solute further comprises an additional compound, and the additional compound comprises one or more of salts of molybdenum, manganese, copper, an alkaline earth metal, cobalt, a rare earth metal, and an alkali metal, wherein no chemical reaction occurs between the components of the solute.

9. The preparation method according to any one of claims 6 to 8, wherein the first impregnation treatment, the second impregnation treatment, or the third impregnation treatment is performed at a temperature of 0-50 °C, and may further be performed at a temperature of 20-30 °C; the first impregnation treatment is performed for 0.1-12 h, and may further be performed for 0.2-10 h, and still further 0.3-9 h.

10. The preparation method according to any one of claims 6 to 9, wherein the treatment in step S1 is performed under a pressure of 0.12-10 atm, and may further be performed under a pressure of 0.15-7 atm; the treatment is performed for 1.2-25 h, and may further be performed for 2-12 h; and/or
the treatment in step S2 is performed under a pressure of 0-1.5 atm, and may further be performed under a pressure of 0-0.09 atm; the treatment is performed for 2-60 h, and may further be performed for 3-45 h; and/or
the treatment in step S3 is performed under a pressure of 0.08-17 atm, and may further be performed under a pressure of 0.15-7 atm; the treatment is performed for 0.3-24 h, and may further be performed for 0.5-6 h.

11. A catalyst, comprising the χ-iron-carbide composite according to any one of claims 1 to 5 or a χ-iron-carbide composite prepared by the preparation method according to any one of claims 6 to 10.

12. Use of the χ-iron-carbide composite according to any one of claims 1 to 5, a χ-iron-carbide composite prepared by the preparation method according to any one of claims 6 to 10, or the catalyst according to claim 11 in a syngas conversion reaction.

13. Use of the χ-iron-carbide composite according to any one of claims 1 to 5, a χ-iron-carbide composite prepared by the preparation method according to any one of claims 6 to 10, or the catalyst according to claim 11 in a reaction for the synthesis of C and H fuels and/or chemicals on the basis of the Fischer-Tropsch synthesis principle.

14. A syngas conversion process, comprising contacting the catalyst according to claim 11 with syngas under reaction conditions.
